# EUROPEAN PATENT SPECIFICATION

(11) **EP 0 601 668 B1**
(45) Date of publication and mention of the grant of the patent: **19.03.1997**
(21) Application number: 93203434.1
(22) Date of filing: 07.12.1993
(51) Int. Cl.: C08G 59/50, C08G 59/68, C08G 59/62

(54) **Epoxy resin composition**
Epoxydharzzusammensetzung
Composition de résine epoxyde

(30) Priority: 09.12.1992 EP 92203843
(43) Date of publication of application: 15.06.1994
(73) Proprietor: SHELL INTERNATIONALE RESEARCH MAATSCHAPPIJ B.V., 2596 HR Den Haag (NL)
(72) Inventor: Kellner, Juergen, B-1348 Ottignies Louvain-La-Neuve (BE)

(56) References cited:
- EP-A- 0 406 166
- US-A- 3 449 281
- US-A- 4 800 222

## Description

The present invention relates to an epoxy resin composition which is curable at ambient and low temperatures and which comprises an epoxy resin compound, an amine curing compound and a beta,gamma-dihydroxyamine as cure accelerator.
Epoxy resin compositions comprising an amine curing compound, which are curable at low and ambient temperatures often require the use of an accelerator (catalyst) to speed up the reaction between the epoxy compound and the amine curing compound. Well known examples of such accelerators are nonylphenol, N-benzyldimethylamine, phenylurea and salicylic acid.

However when using these accelerators a phenomenon which occurs on the cured composition and which can be defined as "whitening" can not always be prevented. Whitening is caused by a side reaction between the amine curing compound and carbon dioxide and is more likely to occur the lower the cure temperature and the higher humidity upon cure. Compositions showing whitening are unattractive for obvious aesthetical reasons and whitening often has a negative effect on the mechanical properties of the cured composition.

Epoxy resin compositions which are curable at low temperature and high humidity comprising an amine curing compound and optionally a cure accelerator are known from European patent application No. 253,339 (EP-A-253,339), which discloses an epoxy resin composition, comprising an epoxy resin, an amine curing compound, a cyclic carbonate and optionally an accelerating compound and/or other additives. EP-A-253,339 is predominantly concerned with the problem of improving interlayer adhesion in multilayered coatings prepared therewith.

The carbonate component of said epoxy resin composition lowers the viscosity of said composition and forms hydroxyalkylurethane structures upon reaction with the amine curing compound. Further, the surface appearance after cure of the epoxy resin compositions of EP-A-253,339 is being improved by addition thereto of a primary aliphatic monoalkylamine, which in particular should prevent the occurrence of whitening. The compositions of EP-A-253,339 have several disadvantages. Firstly the incorporation of urethane structures in the cured epoxy resin amine matrix is not beneficial to the chemical resistance of the cured resin matrix. Secondly only by adding an aliphatic monoalkylamine component to the epoxy resin composition, whitening of the cured composition can be prevented and thirdly the reported cure temperatures of the compositions are not lower than 5 °C.

EP-A-145,323 discloses a two component ambient temperature curable epoxy resin composition, consisting of an epoxy component, comprising an epoxy resin and polyepichlorohydrin, and of a hardener component, comprising a polymercaptan compound or a polyamine.

These compositions may further comprise a tertiary amine accelerator, such as for example 2,4,6tri(dimethylaminomethyl)phenol or dimethylaminoethanol.

According to EP-A-145,323 the polyepichlorohydrin component has a toughening effect on the cured composition and the polymercaptan component imparts rapid cure characteristics to said composition.

The compositions of EP-A-145,323, however, have serious disadvantages too. Firstly, polyepichlorohydrin is a compound the use of which is undesirable in view of health, safety and environmental aspects. Secondly, polymercaptan compounds are unattractive to work with due to their objectionable odour and thirdly these epoxy resin compositions cure at ambient temperature i.e. at temperatures not lower than 15 °C which renders them useless for a whole area of applications which require lower cure temperatures.

The present invention now provides a solution to the objective problem of how to provide epoxy resin/amine compositions which, even when cured under severe conditions of low temperatures and optionally high humidity, show good appearance, show good mechanical properties and which do not show the negative aspects of the low- or ambient temperature amine curable prior art epoxy resin compositions, as discussed above.

Accordingly the invention relates to an ambient and low temperature curable epoxy resin composition comprising
a) an epoxy resin,
b) an amine curing compound and
c) an accelerator,
characterized in that the accelerator is a beta,gamma-dihydroxyamine.

The compositions according to the invention even when cured under severe conditions of low temperature and high humidity, were found to show, in the cured state, an excellent appearance and good mechanical properties, in particular good hardness.

Throughout this specification the following definitions will be adhered to:
- "ambient temperature" defines a temperature range of from 20 °C to 30 °C,
- "low temperature" defines a temperature range of from below 0 °C to 20 °C, in particular of from -5 °C to 20 °C and
- "high humidity" defines a humidity range of from 50 to 100%.
Epoxy resin (a) of the composition according to the present invention, is a compound having on average more than one epoxy group per molecule of the epoxy resin. The epoxy resin (a) may be saturated or unsaturated aliphatic, cycloaliphatic, aromatic or heterocyclic and may be substituted if desired with substituents such as halogen atoms, hydroxy groups, ether groups or other groups which do not interfere with the main reaction(s). Epoxy resin (a) may be monomeric and/or polymeric either liquid, semi solid or solid at the cure temperature of the composition of the invention. When epoxy resins (a) is a solid or semi solid, solutions thereof will normally be used e.g. in one of the solvents listed below. However, liquid epoxy resins (a) are preferably used.

Examples of suitable cycloaliphatic epoxy resins are the polyglycidylethers of hydrogenated bisphenol-A and bisphenol-F and an example of a suitable aliphatic epoxy resin is the polyglycidylether of polyoxypropylene.

Preferred epoxy resins (a) are the liquid polyglycidylethers of polyhydric alcohols and polyhydric phenolic compounds (in particular the phenol novolaks and the dihydric phenols) either used alone or as a blend.

Suitable dihydric phenols for the preparation of the above polyglycidylethers are exemplified by resorcinol, hydroquinone, bisphenol-A, bisphenol-F, tetrabromobisphenol-A, 4,4'-dihydroxydiphenyl, 4,4'-dihydroxy-3,3'-dimethyldiphenylpropane, 4,4'-dihydroxydiphenylcyclohexane, 4,4'-dihydroxybenzophenone, bis(4-hydroxyphenyl)-1,1-ethane, bis(4-hydroxyphenyl)-1,1-isobutane, bis(-4-hydroxy-tert-butylphenyl)-2,2-propane, bis(2-hydroxynaphtyl)ethane, and 1,5-dihydroxynaphtalene, bis(4-hydroxyphenyl)ether, and others such as the chlorinated and brominated products of the dihydric phenols just mentioned.

Particularly preferred epoxy resins (a) are the liquid polyglycidylethers of bisphenol-A, or blends thereof with bisphenol-F, which have an epoxide equivalent weight (EEW) of from 150 to 250. The above polyglycidylethers can be prepared according to methods well known in the art by reacting epichlorohydrin with the appropriate polyol.

The amine curing compound (b) of the epoxy resin composition according to the present invention may be selected from the group consisting of the polyfunctional aliphatic-, cycloaliphatic-, aromatic-, polyether- and araliphatic amines, imidazoles, mannich bases and adducts of amines with polymers and polyamidoamines, or mixtures thereof. Examples of aliphatic amines are the alkylene amines with 2 to 8 carbon atoms in the alkylene group, such as ethylene diamine, diethylenetriamine, 2-ethyl-2-butyl-1,5-diaminopentane, triethylenetetramine, tetraethylenepentamine, dipropylenetriamine, 2,2,4- or 2,4,4-trimethylhexamethylenediamine, bis-(3-aminopropyl)-methylamine, bis-(3-aminoethyl)-methylamine, 1,4-bis-(3-aminopropyl)-piperazine, N-aminoethylpiperazine, and N,N-bis(3-aminopropyl)-ethylenediamine. Examples of cycloaliphatic amines are 1,2 or 1,3-diaminocyclohexane, 1,4-diamino-3,6-diethylcyclohexane, 2-diamino-4-ethylcyclohexane, 1,4-diamino-3,6-diethylcyclohexane, 1-cyclohexyl-3,4-diaminocyclohexane, isophoronediamine, 4,4'-diaminodicyclohexylmethane, 4,4'-diaminodicyclohexylpropane, 2,2-bis(4-aminocyclohexyl)-propane, 3,3'-dimethyl-4,4' -diamino-dicyclohexylmethane, 3-amino-1-cyclohexylaminopropane, and 1,3- and 1,4-bis-(aminomethyl)-cyclohexane. Examples of aromatic amines are 4,4-diaminodiphenylmethane or isomers thereof and diethylene toluene diamine.

Examples of suitable araliphatic amines are those amines wherein the amine groups are present on the aliphatic rest group, such as for example m-, and p-xylylenediamine or the hydrogenated products thereof.

Examples of suitable polyether amines are e.g. bis(3-aminopropyl)polytetrahydrofuran compounds having a molecular weight of from 350 to 2100 and polytetrahydrofuran diamines having a molecular weight of from 1000 to 2000 and an example for a suitable imidazole is (3-aminopropyl)-imidazole.

Each of the above mentioned amines may be used alone or as a mixture of one or more compounds.

When using the highly reactive aliphatic amines such as for example ethylene diamine, diethylene triamine or triethylene tetramine it is advisable to use them in the form of an adduct as indicated below in order to ensure a good appearance of the cured compositions. For low temperature cure the preferred amine curing compounds (b) are the mannich bases and the amine adducts. When cure temperatures lower than 10 °C are being applied the mannich bases are particularly preferred.

Suitable mannich bases are for example those mentioned in US-A-4,269,742, which can be prepared according to methods known in the art. Mannich bases obtainable by reacting formaldehyde, diphenolpropane and a multifunctional amine are preferred, particularly preferred are the group of mannich bases which are obtainable by reacting a compound selected from formaldehyde, urea and formamide with diphenylolpropane and meta-xylylenediamine.

Suitable amine adducts are the adducts of any one of the above mentioned amines with a liquid or solid epoxy resin compound or with one of the reactive diluents listed below. An example of a useful amine adduct is the adduct of 2-ethyl-2-butyl-1,5-diaminopentane and the diglycidylether of bisphenol-A having an epoxy equivalent weight of from 184 to 190. A blend of the amine adduct and any one of the above mentioned free amines (either the same - or different amine used to prepare the adduct with) may also be favourably used as amine curing compound (b).

The amount of amine curing compound (b) used in the epoxy resin composition according to the invention depends on the particular composition and on the curing conditions applied. In general the amount used will be such so as to provide of from 0.5 to 1.5, preferably of from 0.8 to 1.2 amino hydrogen atoms per epoxy group of the epoxy resin (a).

The accelerator (c) as defined above accelerates the epoxy resin amine cure reaction, but is not capable alone, i.e. in the absence of a curing agent, of curing the epoxy resin composition of the invention to any substantial degree at low and ambient temperatures.

The accelerator (c) used may be solid or liquid at the cure temperature of the composition, hereafter defined as solid - and liquid accelerators. The use of liquid accelerators (c) in the composition according to the invention is preferred in particular in civil engineering applications, where good processability of the compositions under low temperature conditions is required. A liquid accelerator (c) may even function as viscosity lowering agent, due to its viscosity cutting power. This may allow a reduction of the amount of solvent or (non) reactive diluent as defined below, when used in the compositions of the present invention. It is generally recognized that the amount of non reactive diluent should be kept as low as possible in view of the possible negative effect thereof on the reactivity of the composition and on the chemical- and physical properties of the cured composition.

The accelerator (c) may be a primary-, a secondary- or a tertiary amine. Preferred accelerators (c) are beta,gamma-dihydroxy tertiary amines, even more preferred those being liquid at the cure temperature of the composition of the invention. Suitable beta,gammadihydroxy tertiary amines can be represented by the following general formula I 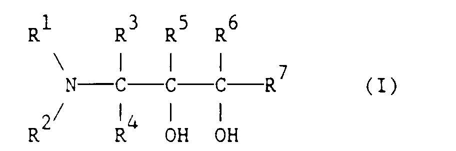 wherein R¹ and R² may each independently be a radical selected from the group consisting of C₁₋₁₂ linear alkyl, C₁₋₁₂ branched alkyl, cyclic alkyl, aryl or aralkyl, or may form together a piperidino-, a morpholino-, or a pyrrolidino radical, and wherein R³, R⁴, R⁵, R⁶ and R⁷ may each independently be a radical selected from the group consisting of hydrogen, C₁₋₁₂ linear alkyl, C₁₋₁₂ branched alkyl, cyclic alkyl, aryl or aralkyl. All said radicals may optionally be substituted by one or more inert substituents. Inert substituents are substituents which do not take part in any reaction upon cure of the composition of the invention, examples thereof are ether- and halogen groups. The most preferred are the 3-dialkylaminoalkane-1,2-diols of the above formula (I) wherein R¹ and R² may each independently be a radical selected from the group consisting of linear or branched alkyl having of from 1 to 12 carbon atoms, preferably of from 1 to 8 carbon atoms, and wherein R³, R⁴, R⁵, R⁶ and R⁷ may each independently be a radical selected from the group consisting of hydrogen or linear or branched alkyl having of from 1 to 12 carbon atoms, preferably of from 1 to 8 carbon atoms. Said radicals being optionally substituted with inert substituents. Examples of such accelerators are 3-(dimethylamino)propane-1,2-diol, 4-(dimethylamino)butane-2,3-diol, 5-(dimethylamino)pentane-3,4-diol, 6-(dimethylamino)hexane-4,5-diol, 7-(dimethylamino)heptane-5,6-diol, 8-(dimethylamino)octane-6,7-diol, 3-(diethylamino)propane-1,2-diol, 4-(diethylamino)butane-2,3-diol, 5-(diethylamino)pentane-3,4-diol, 6-(diethylamino)hexane-4,5-diol, 7-(diethylamino)heptane-5,6-diol, 8-(diethylamino)octane-6,7-diol, 3-(dipropylamino)propane-1,2-diol, 4-(dipropylamino)butane-2,3-diol, 5-(dipropylamino)pentane-3,4-diol, 6-(dipropylamino)hexane-4,5-diol, 7-(dipropyl)aminoheptane-5,6-diol, 3-(N,N'methyl,ethylamino)propane-1,2-diol, 3-(N,N'ethyl,propyl-amino)propane-1,2-diol and 3-(N,N'propyl,butyl-amino)propane-1,2-diol.

A particularly preferred accelerator (c) is 3-(diethylamino)propane-1,2-diol. The amount of accelerator (c) used in the composition of the invention may vary considerably however amounts lying in the range of from 0.01 to 20% by weight, preferably of from 1 to 6% by weight per 100% by weight of epoxy resin (a) to be cured, will as a general rule suffice.

For obtaining the desired level of processability or handlebility of the epoxy resin composition of the invention at its working temperature, which is the temperature at which the composition of the invention is actually applied to a substrate, one or more solvents or reactive - or non reactive diluent(s) may be added thereto. It will be appreciated that the working temperature is not always necessarily the cure temperature. Examples of suitable reactive diluents are liquid mono- or diglycidylethers of alcohols or phenols such as butanol, 2-ethylhexanol, hexanediol and cresol; and the liquid monoglycidylesters of monocarboxylic acids such as saturated aliphatic monocarboxylic acids, having a total number of carbon atoms of from 5 to 18, wherein the carboxyl group is attached to a tertiary or quaternary carbon atom (alpha-branched monocarboxylic acids). Examples of suitable solvents are ketones such as acetone and methylisobutylketone; esters such as ethylacetate, butylacetate, ethylene glycol monomethyl ether acetate, ethylene glycol monoethyl ether acetate; ethers such as methyl- ethyl-, or butyl ethers of ethylene glycol or diethylene glycol; aromatic hydrocarbons such as benzene, toluene or xylene; alcohols such as methanol, ethanol, isopropylalcohol, n-butyl alcohol or benzylalcohol or mixtures of the compounds just mentioned. Examples of non reactive diluents are furfurylalcohol, nonylphenol, dibutylphthalate, dioctylphthalate, dimethylpropyleneurea and benzylalcohol. The latter being a particularly preferred non reactive diluent. Whether a solvent or a (non) reactive diluent will be used in the composition of the invention will depend on the (inherent) viscosity of said composition and on the desired application viscosity. In general amounts of solvent or (non) reactive diluent may vary between of from 0 to 50% by weight, based on the weight of the epoxy resin (a), however for most applications an amount of from 1 to 25% by weight, based on the weight of the epoxy resin (a), will suffice.

The composition according to the invention may further comprise small amounts of additives when a particular application so requires, such as for example fillers, organic and inorganic fibres, silicates, thixothropes and flame retarding agents. In order to prevent the occurrence of (premature) cure reactions in the epoxy resin composition of the invention before actual application thereof, storage should be in the form of at least a two pack system, one pack comprising at least the epoxy resin (a) and the other pack comprising at least the curing compound (b). Only shortly before application, thus preferably on site, these two packs should be mixed thoroughly.

The accelerator (c) and the optional further additives indicated above, may be added as a whole to the epoxy resin (a) pack or to the curing compound (b) pack, or even partly to both packs, before storage of said packs, though for obvious reasons it is preferred to add the accelerator (c) to the curing compound (b) pack. Another option is to add the accelerator (c) and the optional further additives separately, when mixing the two packs, i.e. shortly before the moment of use of the resulting composition.

After a mixture has been prepared comprising the epoxy resin (a), the resin curing agent (b), the accelerator (c) and optionally a solvent or (non) reactive diluent and any further additive(s), the epoxy resin composition of the invention should be curable within an acceptable period of time.

Cure temperatures of the compositions of the invention may vary considerably and may be as high as 30 °C or below 0 °C e.g. -5 °C.

The fact that the epoxy resin compositions of the invention are curable at such low temperatures without negatively affecting the appearance and hardness of said compositions after cure is considered a particular advantage.

The cure time will inter alia depend on the specific components of the system being handled, on the thickness of the layer being applied, on the cure temperature(s) of the system and the temperature of the substrate and the temperature and the humidity of the environment. It should be noted that in particular those compositions of the invention comprising a mannich base as curing compound (b) show generally a relatively high reactivity and thus provide relatively short cure times.

The present invention further relates to a composition according to the invention which has been cured at ambient or low temperature.

The epoxy resin compositions of the present invention are inter alia suitable for use in coatings and in civil engineering applications, for example in formulations for floorings, (solvent borne) primers, tank linings, concrete adhesives, crack injections, marine applications and for underwater applications.
The invention is illustrated by the following examples.

### EXAMPLES

### 1. Preparation and use of epoxy resin compositions 1 to 11 in table 1

- Compositions 1,5,6,7,10 and 11 are according to the invention.
   Compositions 2,3,4,8 and 9 are for comparison.
   Formulations 1 to 10 are coating compositions.
   Formulation 11 is a flooring composition.
- Formulations 1 to 11 comprising the ingredients as indicated in table 1, were prepared shortly before use at a temperature of 23 °C and a humidity of 50% by blending the curing compound with the accelerator for a period of time until a homogeneous blend was obtained whereafter the remainder of the components were added, followed by mixing until homogeneity.
- A layer of each of the formulations 1 to 11 was applied to a suitable substrate. The wet film layer thicknesses of the various compositions so applied were:
   compositions 1 to 9: 200 micrometer,
   composition 10: 90 micrometer and
   composition 11: 1000 micrometer.
- These layers were cured at a temperature and for a period of time as indicated in table 1. The humidity levels at the respective cure temperatures indicated in table 1 were:
   Cure T 23 °C, humidity 50%
   Cure T 10 °C, humidity 65%
   Cure T 2 °C, humidity 80%.
- In addition epoxy resin compositions 1 and 5 were applied under water on a rusty metal panel with a brush to a wet film of approximately 200 micrometer, and allowed to cure under water for 7 days at a temperature of 10 °C.

### 2. Ingredients used in the compositions 1 to 11 in table 1:

- Epoxy resin A is Epikote 828 (Epikote is a tradename), a liquid diglycidylether of Bisphenol A (BPA) having an Epoxy Equivalent Weight (EEW) of from 182 to 194, obtained from Shell International Chemical Company (SICC) Ltd.
- Epoxy resin B is Epikote 240, a mixture of liquid diglycidylethers of bisphenol-A and bisphenol F having an EEW of from 185 to 196 containing a reactive diluent, obtained from SICC Ltd.
- Epoxy resin C is a solvent borne epoxy resin system consisting of a solution of 100 grams of Epikote DX 901, a semi solid polyglycidylether of bisphenol A, having an EEW of from 455 to 500, in 79 grams of a 1:1 (weight ratio) solvent blend of xylene and methyl-Proxitol (Proxitol is a tradename), obtained from SICC Ltd.
- Curing compound A is a mannich base which has been prepared by reacting meta-xylylenediamine (MXDA) with bisphenol A (BPA) and formaldehyde in molar ratios of 2.5:1:1.
- Accelerator A is 3-diethylaminopropane-1,2-diol (DEAPD)
- Accelerator B is salicylic acid
- Accelerator C is nonylphenol
- Accelerator D is dimethylaminoethanol
- Benzylalcohol was used as a non reactive diluent in the compositions 1 to 10.
- The filler ingredients used in formulation 11 were:
   Sibelco M6 (Sibelco is a tradename), a quartz floor component obtained from Sibelco.
   Methylisobutylketone (MIBK), a solvent obtained from Shell International Chemical Company (SICC) Ltd.
   Kronos RN 59 (Kronos is a tradename) a pigment obtained from Titan Gesellschaft GmBH Germany.
   Bayferrox 318 M (Bayferrox is a tradename) a pigment obtained from Bayer A.G. Germany.
   Xylene a solvent obtained from SICC Ltd.
   Tegopren (Tegopren is a tradename), an antifoaming agent obtained from Goldtschmidt.
   E 216 is a blend of a diglycidylether of bisphenol A and a cresylglycidylether obtained from SICC Ltd.
   Wacker SL (Wacker is a tradename), an antifoaming agent obtained from Wacker Chemie.

### 3. Analysis methods of the cured compositions

- All analysis methods were carried out at 23 °C at a humidity of 50%.
- The Brookfield viscosity (in Pa.s) of the curing compound/accelerator homogeneous blend and the Brookfield mix viscosity (in Pa.s) of the final homogenous epoxy resin formulation was determined 5 minutes after mixing all ingredients according to ASTM D 2196.
- The König hardness (in seconds, s), was determined according to ISO 1522-73.
- The Buchholz hardness was determined according to ISO 2815-73.
- The impact resistance (in Inch/Lb) was determined according to ASTM D 2794-84.
- The Erichsen Slow Penetration (mm) was determined according to ISO 1520-73.
- The appearance of the compositions, (excellent, e; very good, vg; good, g; medium, m, bad, b), was determined by visual inspection.

### 4. Results

- See table 1.
- The Buchholz hardness of compositions 1 and 5, which were applied under water and subsequently cured under water for a period of 7 days at 10 °C, was 80-85 s, whereas no loss of adhesion was being observed.

### 5. Conclusion

- Comparison of the data presented in table 1 in respect of a particular formulation according to the invention with the data of a particular comparative formulation which comprises the respective ingredients in (near) identical amounts, leads to the general conclusion that the compositions of the invention have a lower mix viscosity show a better appearance after cure, and show comparable hardness.
- The composition of the invention of example 5 has a faster build up of the network than comparative composition 4.
- Data presented in table 1 in relation to compositions 10 and 11 show that a solution of a (semi) solid epoxy resin compound (a) may also be favourably applied in compositions according to the invention and that a composition of the invention can also be favourably applied in flooring formulations.
- Finally, the above mentioned results in respect of the under water application and cure of compositions 1 and 5 give evidence of the suitability of the epoxy resin compositions according to the invention for such applications.

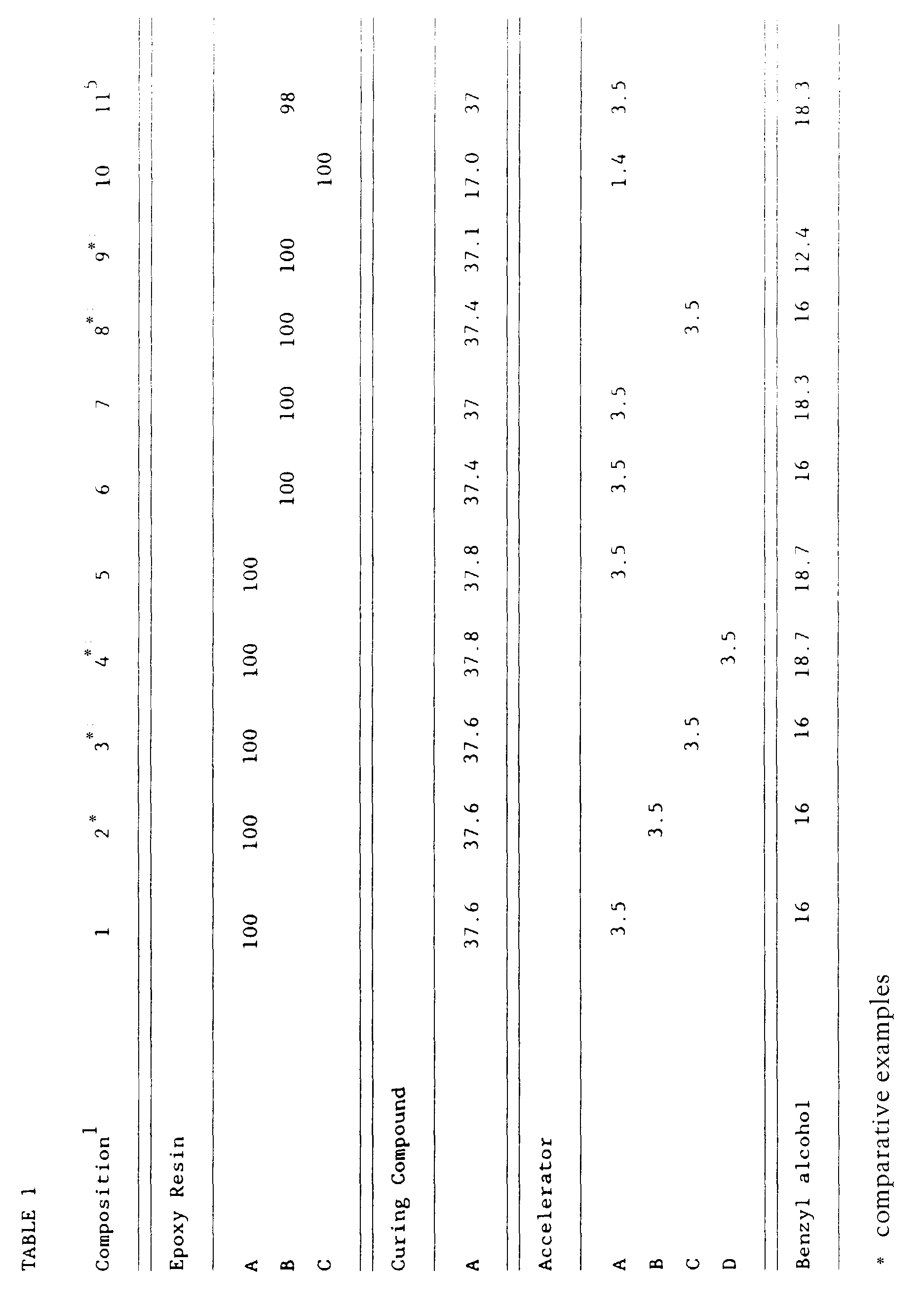

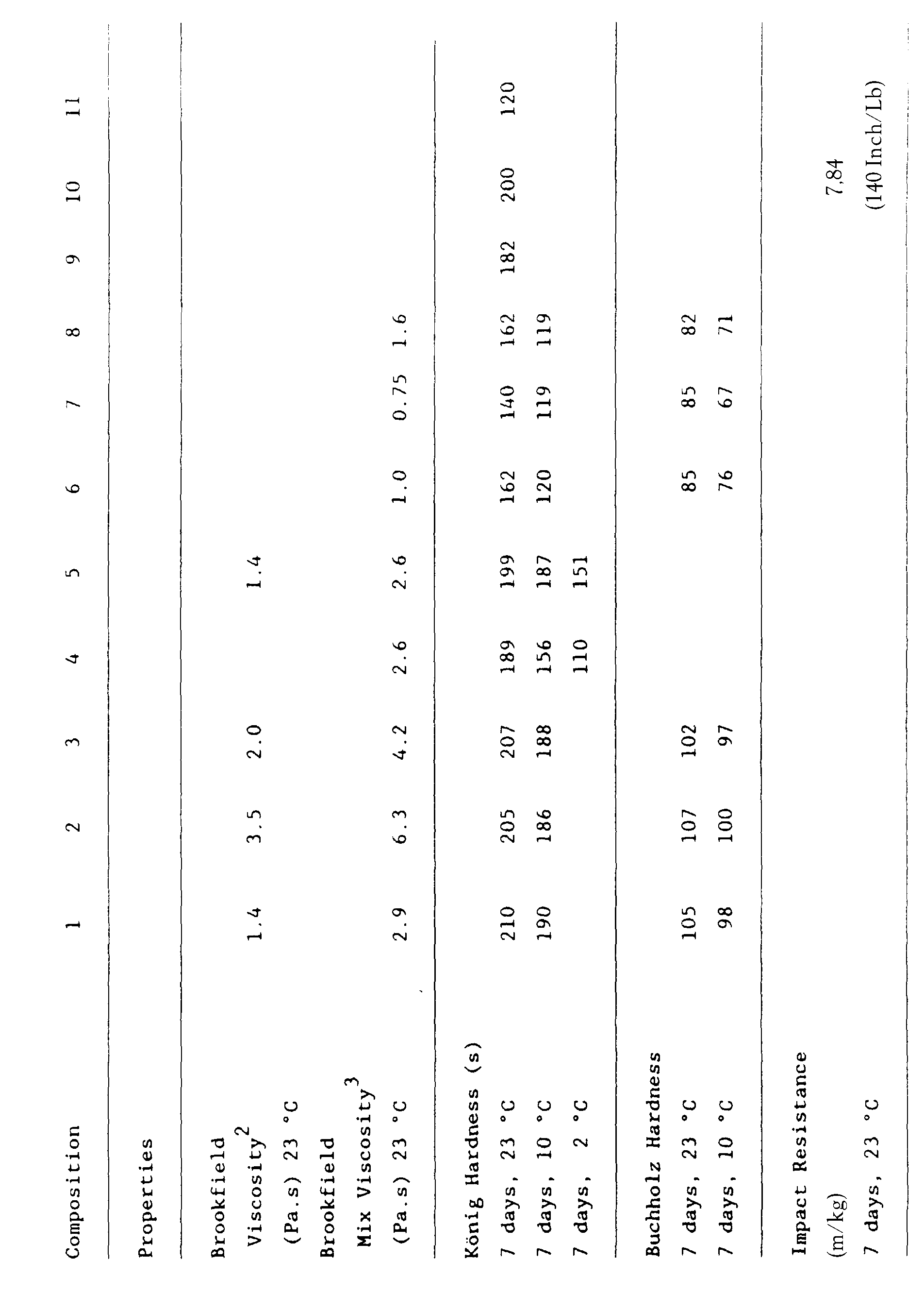

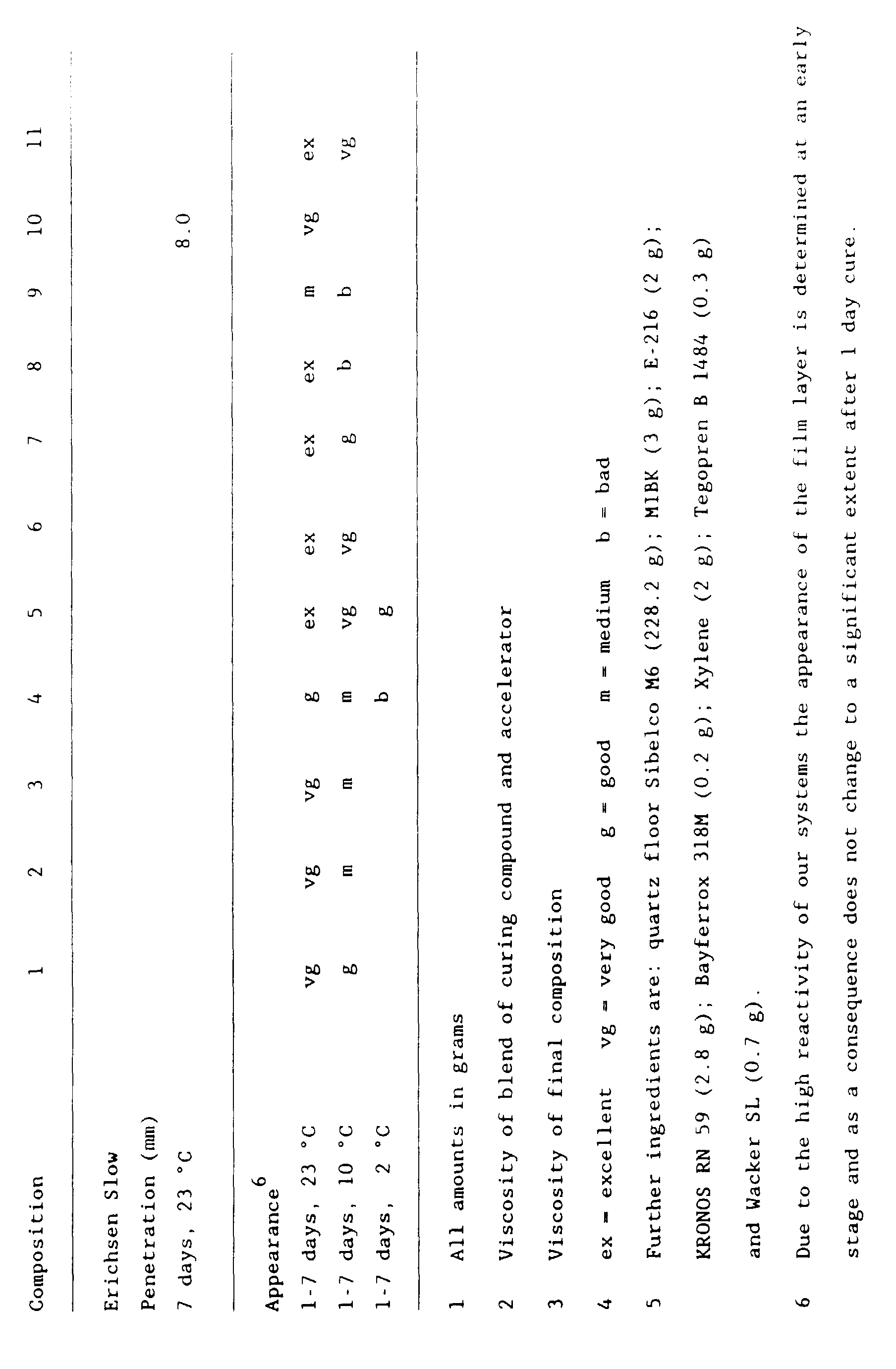

## Claims

1. A low and ambient temperature curable epoxy resin composition comprising
a) an epoxy resin,
b) an amine curing compound and
c) an accelerator,
characterized in that the accelerator is a beta,gamma-dihydroxyamine.

2. An epoxy resin composition as claimed in claim 1 wherein the accelerator (c) is a beta,gamma-dihydroxy tertiary amine.

3. An epoxy resin composition as claimed in claim 1 or 2 wherein the beta,gamma-dihydroxyamine is a compound selected from the group represented by the general formula (I) 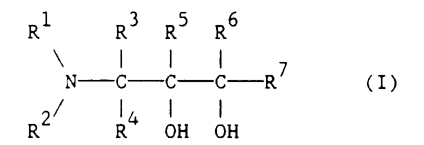 wherein R¹ and R² may each independently be a radical selected from the group consisting of C₁₋₁₂ linear alkyl, C₁₋₁₂ branched alkyl, cyclic alkyl, aryl or aralkyl, or may form together a piperidino-, a morpholino-, or a pyrrolidino radical, and wherein R³, R⁴, R⁵, R⁶ and R⁷ may each independently be a radical selected from the group consisting of hydrogen, C₁₋₁₂ linear alkyl, C₁₋₁₂ branched alkyl, cyclic alkyl, aryl or aralkyl, said radicals optionally being substituted with one or more inert substituents.

4. An epoxy resin composition as claimed in claim 3 wherein R¹ and R² may each independently be a radical selected from the group consisting of linear- or branched alkyl having of from 1 to 8 carbon atoms and wherein R³, R⁴, R⁵, R⁶ and R⁷ may each independently be a radical selected from the group consisting of hydrogen or linear- or branched alkyl having of from 1 to 8 carbon atoms, said radicals optionally being substituted with one or more inert substituents.

5. An epoxy resin composition as claimed in any one of the claims 1 to 4 wherein the epoxy resin (a) is a liquid polyglycidylether of a polyhydric alcohol or of a polyhydric phenolic compound or a mixture thereof.

6. An epoxy resin composition as claimed in claim 5 wherein the epoxy resin (a) is a polyglycidylether of bisphenol-A or a blend thereof with bisphenol-F having an epoxy equivalent weight of from 150 to 250.

7. An epoxy resin composition as claimed in any one of the claims 1 to 6 wherein the amine curing compound (b) is selected from the group consisting of the polyfunctional aliphatic-, cycloaliphatic-, aromatic-, polyether- and araliphatic amines, imidazoles, mannich bases, adducts of amines with polymers, polyamidoamines, or mixtures of the aforesaid compounds.

8. An epoxy resin composition as claimed in claim 7 wherein the amine curing compound (b) is a mannich base or an amine adduct.

9. An epoxy resin composition as claimed in claim 8 wherein the amine curing compound b) is a mannich base which is the reaction product of a compound selected from formaldehyde, urea and formamide with diphenylolpropane and meta-xylylene-diamine.

10. A cured composition comprising an epoxy resin composition as claimed in any one of the claims 1 to 9.

## Patentansprüche

1. Bei niedrigen Temperaturen und bei Raumtemperatur härtbare Epoxidharzzusammensetzung, enthaltend
a) ein Epoxidharz,
b) ein als Härter wirkendes Amin und
c) einen Beschleuniger,
dadurch gekennzeichnet, daß es sich bei dem Beschleuniger um ein beta,gamma-Dihydroxyamin handelt.

2. Epoxidharzzusammensetzung nach Anspruch 1, wobei es sich bei dem Beschleuniger (c) um ein tertiäres beta,gamma-Dihydroxyamin handelt.

3. Epoxidharzzusammensetzung nach einem der Ansprüche 1 oder 2, wobei es sich bei dem beta,gamma-Dihydroxyamin um eine Verbindung handelt, die aus der Gruppe ausgewählt ist, die der allgemeinen Formel (I) 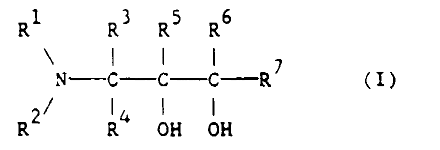 entspricht, worin R¹ und R² jeweils unabhängig voneinander einen Rest, ausgewählt aus der Gruppe bestehend aus geradkettigem C₁₋₁₂-Alkyl, verzweigtem C₁₋₁₂-Alkyl, cyclischem Alkyl, Aryl oder Aralkyl, bedeuten oder gemeinsam einen Piperidino-, Morpholino- oder Pyrrolidinorest bilden können und worin R³, R⁴, R⁵, R⁶ und R⁷ jeweils unabhängig voneinander einen Rest, ausgewählt aus der Gruppe bestehend aus Wasserstoff, geradkettigem C₁₋₁₂-Alkyl, verzweigtem C₁₋₁₂-Alkyl, cyclischem Alkyl, Aryl oder Aralkyl, bedeuten können, wobei diese Reste gegebenenfalls mit einem oder mehreren inerten Substituenten substituiert sein können.

4. Epoxidharzzusammensetzung nach Anspruch 3, wobei R¹ und R² jeweils unabhängig voneinander einen Rest, ausgewählt aus der Gruppe bestehend aus geradkettigem oder verzweigtem Alkyl mit 1 bis 8 Kohlenstoffatomen, und R³, R⁴, R⁵, R⁶ und R⁷ jeweils unabhängig voneinander einen Rest, ausgewählt aus der Gruppe bestehend aus Wasserstoff oder geradkottigem oder verzweigtem Alkyl mit 1 bis 8 Kohlenstoffatomen bedeuten können, wobei diese Reste gegebenenfalls mit einem oder mehreren inerten Substituenten substituiert sein können.

5. Epoxidharzzusammensetzung nach einem der Ansprüche 1 bis 4, wobei es sich bei dem Epoxidharz (a) um einen flüssigen Polyglycidylether eines mehrwertigen Alkohols oder einer mehrwertigen Phenolverbindung oder eines Gemischs daraus handelt.

6. Epoxidharzzusammensetzung nach Anspruch 5, wobei es sich bei dem Epoxidharz (a) um einen Polyglycidylether von Bisphenol-A oder einer Mischung davon mit Bisphenol-F mit einem Epoxidäquivalentgewicht von 150 bis 250 handelt.

7. Epoxidharzzusammensetzung nach einem der Ansprüche 1 bis 6, wobei das als Härter wirkende Amin (b) aus der Gruppe bestehend aus den polyfunktionellen aliphatischen, cycloaliphatischen, aromatischen, Polyether- und araliphatischen Aminen, Imidazolen, Mannich-Basen, Addukten aus Aminen und Polymeren, Polyamidoaminen oder Gemischen der vorgenannten Verbindungen ausgewählt ist.

8. Epoxidharzzusammensetzung nach Anspruch 7, wobei es sich bei dem als Härter wirkenden Amin (b) um eine Mannich-Base oder ein Aminaddukt handelt.

9. Epoxidharzzusammensetzung nach Anspruch 8, wobei es sich bei dem als Härter wirkenden Amin (b) um eine Mannich-Base handelt, bei der es sich um das Produkt der Umsetzung einer unter Formaldehyd, Harnstoff und Formamid ausgewählten Verbindung mit Diphenylolpropan und meta-Xylylendiamin handelt.

10. Gehärtete Zusammensetzung, enthaltend eine Epoxidharzzusammensetzung nach einem der Ansprüche 1 bis 9.

## Revendications

1. Composition de résine époxy, durcissable à la température ambiante et à basse température, qui comprend :
a) une résine époxy,
b) un composé de durcissement du type amine, et
c) un accélérateur,
caractérisée en ce que l'accélérateur est une bêta,gamma-dihydroxylamine.

2. Composition de résine époxy suivant la revendication 1, caractérisée en ce que l'accélérateur (c) est une bêta,gamma-dihydroxylamine tertiaire.

3. Composition de résine époxy suivant la revendication 1 ou 2, caractérisée en ce que la bêta,gamma-dihydroxylamine est un composé choisi dans le groupe de substances représentées par la formule générale (I) : 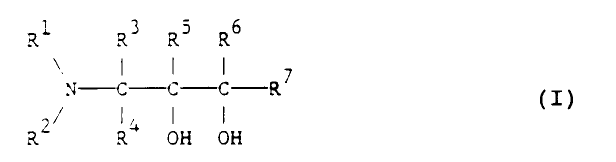 dans laquelle R¹ et R² peuvent chacun représenter indépendamment un radical choisi dans le groupe formé par les radicaux alkyle linéaires en C₁ à C₁₂, les radicaux alkyle ramifiés en C₁ à C₁₂, les radicaux alkyle cycliques, aryle ou aralkyle, ou bien R¹ et R² peuvent former ensemble un radical pipéridino, morpholino ou pyrrolidino, et dans laquelle les symboles R³, R⁴, R⁵, R⁶ et R⁷ peuvent chacun indépendamment représenter un radical choisi dans le groupe formé par l'hydrogène, les radicaux alkyle linéaires en C₁ à C₁₂, les radicaux alkyle ramifiés en C₁ à C₁₂, les radicaux alkyle cycliques, aryle ou aralkyle, lesdits radicaux étant éventuellement substitués par un ou plusieurs substituants inertes.

4. Composition de résine époxy suivant la revendication 3, caractérisée en ce que R¹ et R² peuvent chacun indépendamment représenter un radical choisi dans le groupe formé par les radicaux alkyle linéaires ou ramifiés possédant de 1 à 8 atomes de carbone et en ce que R³, R⁴, R⁵, R⁶ et R⁷ peuvent chacun indépendamment représenter un radical choisi dans le groupe formé par l'hydrogène et les radicaux alkyle linéaires ou ramifiés possédant de 1 à 8 atomes de carbone, lesdits radicaux étant éventuellement substitués par un ou plusieurs substituants inertes.

5. Composition de résine époxy suivant l'une quelconque des revendications 1 à 4, caractérisée en ce que la résine époxy (a) est un éther polyglycidylique liquide d'un alcool polyhydroxylé ou d'un composé phénolique polyhydroxylé ou d'un mélange de ceux-ci.

6. Composition de résine époxy suivant la revendication 5, caractérisée en ce que la résine époxy (a) est un éther polyglycidylique du Bisphénol A ou d'un mélange de celui-ci avec le Bisphénol F possédant un équivalent poids d'époxy de 150 à 250.

7. Composition de résine époxy suivant l'une quelconque des revendications 1 à 6, caractérisée en ce que le composé de durcissement du type amine (b) est choisi dans le groupe formé par les amines aliphatiques, cycloaliphatiques, aromatiques, du type polyéther et araliphatiques, polyfonctionnelles, les imidazoles, les bases de Mannich, les adduits d'amines avec des polymères, des polyamidoamines, ou des mélanges des composés précités.

8. Composition de résine époxy suivant la revendication 7, caractérisée en ce que le composé de durcissement du type amine (b) est une base de Mannich ou un adduit d'amine.

9. Composition de résine époxy suivant la revendication 8, caractérisée en ce que le composé de durcissement du type amine (b) est une base de Mannich qui est le produit de la réaction d'un composé choisi parmi le formaldéhyde, l'urée et le formamide avec le diphénylolpropane et la méta-xylylènediamine.

10. Composition durcie comprenant une composition de résine époxy suivant l'une quelconque des revendications 1 à 9.
